# EUROPEAN PATENT SPECIFICATION

(11) **EP 3 502 454 B1**
(45) Date of publication and mention of the grant of the patent: **03.02.2021**
(21) Application number: 18210602.1
(22) Date of filing: 06.12.2018
(51) Int. Cl.: F02K 1/72, F02K 1/80

(54) **NACELLE FOR A JET ENGINE**
GONDEL FÜR EIN STRAHLTRIEBWERK
NACELLE POUR MOTEUR À RÉACTION

(30) Priority: 22.12.2017 US 201762609697 P; 13.11.2018 US 201816189131
(43) Date of publication of application: 26.06.2019
(73) Proprietor: Airbus Operations S.A.S., 31060 Toulouse (FR)
(72) Inventor: FORT, Frédéric, 31180 SAINT GENIES BELLEVUE (FR); BELLANGER, Alexandre, 31170 TOURNEFEUILLE (FR); JOUATHEL, Laurent, 31490 LEGUEVIN (FR); DAVISON, Gary, CARRICKGERGUS, Antrim BT38 8LT (GB); LOCKHART, Richard, DOLLINGSTOWN, Antrim BT66 7UH (GB)
(74) Representative: Gicquel, Olivier Yves Gérard

(56) References cited:
- EP-A1- 3 059 432
- WO-A1-2014/052281
- US-A1- 2017 089 297
- US-B2- 9 334 831

## Description

The present invention concerns a nacelle for a jet engine having a reverse thruster.

Jet aircraft engines configured for under-wing mounting to an aircraft are known to include a nacelle encasing the engine. The engine is connected via a pylon to the underside of the jet aircraft wing. One known aspect of engine placement beneath the wing is maintaining a clearance space between the nacelle which encases the jet engine and a leading edge slat of the wing. The leading edge slat can for example, be moveable between different positions to, for example, impact lift and drag of the aircraft. For example, the leading edge slat can be moved in a downward direction toward a jet engine located on the underside of the wing to create drag during a landing operation.

In addition to leading edge slat movement during a landing operation, the jet engine itself can be configured with a reverse thrust operation whereby exhaust air from the jet engine is redirected from an aft outlet portion of the engine, to a peripheral region of the jet engine via, for example, cascades. Cascades include plural vanes for redirecting airflow received via an inlet of the jet engine outward from a periphery of the jet engine to slow forward movement of the aircraft during landing.

One style of thrust reverser is a cascade reverser that incorporates radially arranged openings near the aft edge of the fan cowl of a turbofan engine. Within each of the one or more openings is mounted a cascade set of air flow turning vanes. A blocking door and its associated actuating system are positioned flush with the inner wall of the fan cowl adjacent to each opening. The outer surface of the cascade sets of vanes are covered by a "sleeve like" translating cowl, so called the transcowl. When the thrust reversers are activated during an aircraft landing operation, an electro-mechanical actuating system causes the translating cowl to move aft thereby uncovering the cascades. A linkage between the translating cowl and blocking doors moves the blocking doors into a bypass air stream to thereby block a normal path of the bypass airflow from the aft portion of the jet engine and divert it out through the cascades. The air flow turning vanes of the cascades can redirect the air flow in a forward direction of the aircraft to help slow the aircraft.

The translating cowl should not contact, during aircraft operation, any portion of the wing to which the jet engine is relatively closely positioned. Indeed, a minimal clearance (e.g., few inches) between the wing's leading edge slat and the transcowl is desired to avoid any risk of contact.

More recently, jet engines have been developed with a high bypass ratio engine to, for example, increase the airflow bypass region for the bypass airflow which normally exits the aft portion of the jet engine. An increase in the airflow bypass region diameter involves increasing the diameters of the jet engine fan and of the nacelle that surround the engine and the fan. A larger diameter nacelle implies that a reduced proximity between the leading edge slat of the wing and the nacelle will result, or alternately an increase in height of the landing gear is required to maintain the prior clearance. As an optimal solution, the clearance tolerance between the wing's leading edge slat and the transcowl should be addressed particularly on the inboard side of the nacelle, closer to the aircraft fuselage, due to the dihedral of the wing.

A solution which focuses on a clearance tolerance of the nacelle should preserve the translational movement of the transcowl. Such movement allows the cascades to be covered during normal flight operation to preserve aerodynamic performance, yet uncovered during a landing operation via a movable drive actuator mechanism.

A known transversely moveable cowl, or sleeve, is disclosed in U.S. Patent Nos. 8,727,275, 8,931,736, 9,228,532 and 9,784,216 which share a common specification. These patents disclose a nacelle configured to be coupled to an underside of a wing, and a fixed clearance space between an outlet cowling of the nacelle and a leading edge slat of the wing. To achieve this fixed clearance space, the outlet cowling includes a moveable portion configured as an outer translating sleeve, and includes another fixed portion located adjacent to the leading edge slat. This other fixed portion does not move when the reverse thrust configuration is activated so as to maintain the fixed clearance space of the nacelle from the leading edge slat.

U.S. Patent No. 9,334,831 discloses a nacelle for an aircraft bypass turbofan engine which includes a downstream section having an outer structure with a cowling movably mounted on an inner fixed structure. One first panel is mounted on the inner structure on one side of the nacelle, and one second panel is mounted on the other side of the nacelle. The first panel is fixed and arranged to limit physical interference of the cowl with an element of the aircraft wing during thrust reversal, and at least one second panel is mounted on an opposite side of the top of the nacelle, the second panel being movable relative to the inner fixed structure and arranged to increase air discharged from the nacelle during thrust reversal.

In EP 3 059 432, US 2017/0089297 and WO 2014/052281, further thrust reverser mechanisms are disclosed.

There is a need for an alternative nacelle which optimizes aerodynamic performance of an aircraft to which it is attached, while observing tight clearance tolerances between moveable portions of the wing, such as the moveable leading edge slat, and moveable portions of the nacelle such as the translating cowl.

To this end, a nacelle for a jet engine as claimed in claim 1 is disclosed.

Other features and advantages of the present disclosure will become more apparent upon reading the following detailed description in conjunction with the accompanying drawings, wherein like elements are designated by like numerals, and wherein:
- Figure 1 shows a jet engine mounted under a wing of an aircraft, the jet engine comprising a nacelle according to the invention having movable translating cowl panel and automatic translating panel upon activation/deactivation of a reverse thrust operation.;
- Figure 2A is a top view of the nacelle of the Figure 1 jet engine with translating cowl panel and automatic translating panel in a stowed state according to a first embodiment of the nacelle according to the invention;
- Figure 2B is view similar than that of the Figure 2A with translating cowl panel and automatic translating panel in a stowed state according to a second embodiment of the nacelle according to the invention;
- Figure 2C is view similar than that of the Figure 2A with translating cowl and automatic translating panel in a deployed state according to the first embodiment of the nacelle according to the invention;
- Figure 2D illustrates the basic stationary framework of the automatic translating panel and shows an exemplary stowed state of the automatic translating panel of the Figure 2A;
- Figure 2E, similar to Figure 2D, illustrates the basic stationary framework of the automatic translating panel and shows an exemplary deployed state of the automatic translating panel of the Figure 2C;
- Figures 2F, 2G and 2H illustrate three different exemplary mechanisms for maintaining the automatic translating panel in place on the jet engine during flight and/or during guidance upon activation of a reverse thrust operation.

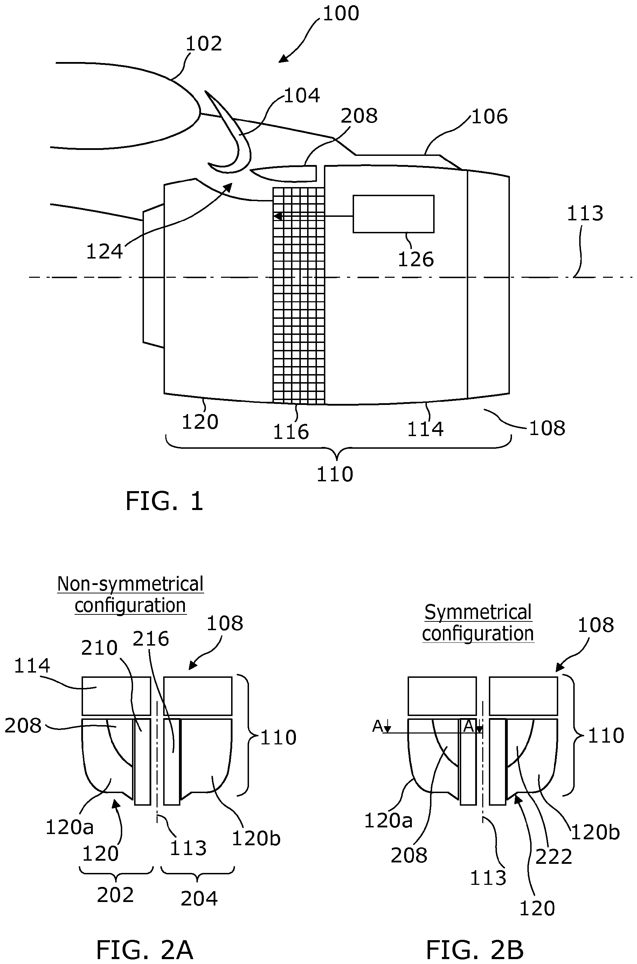

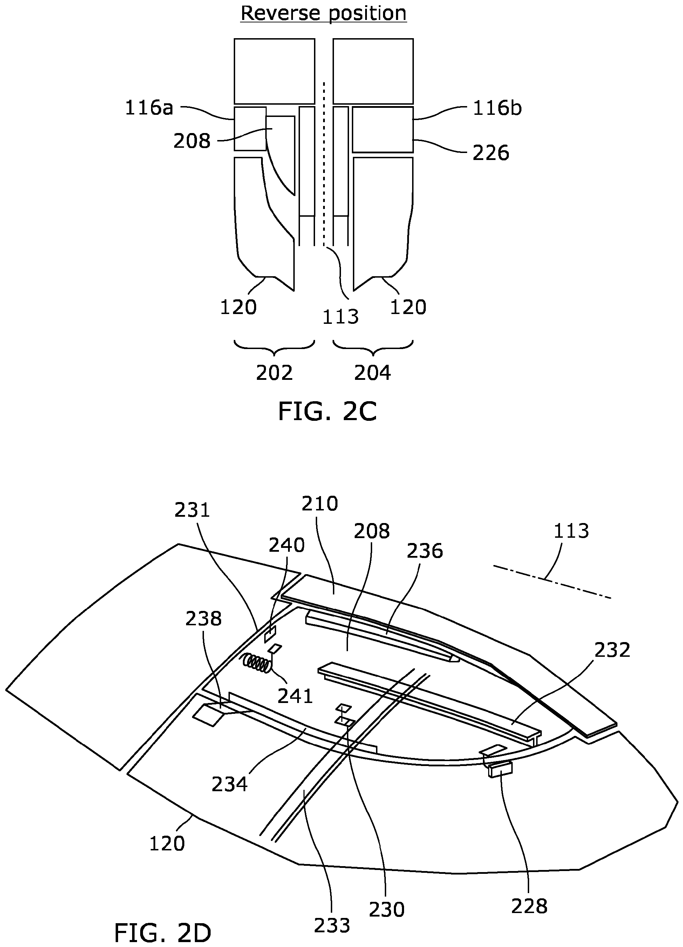

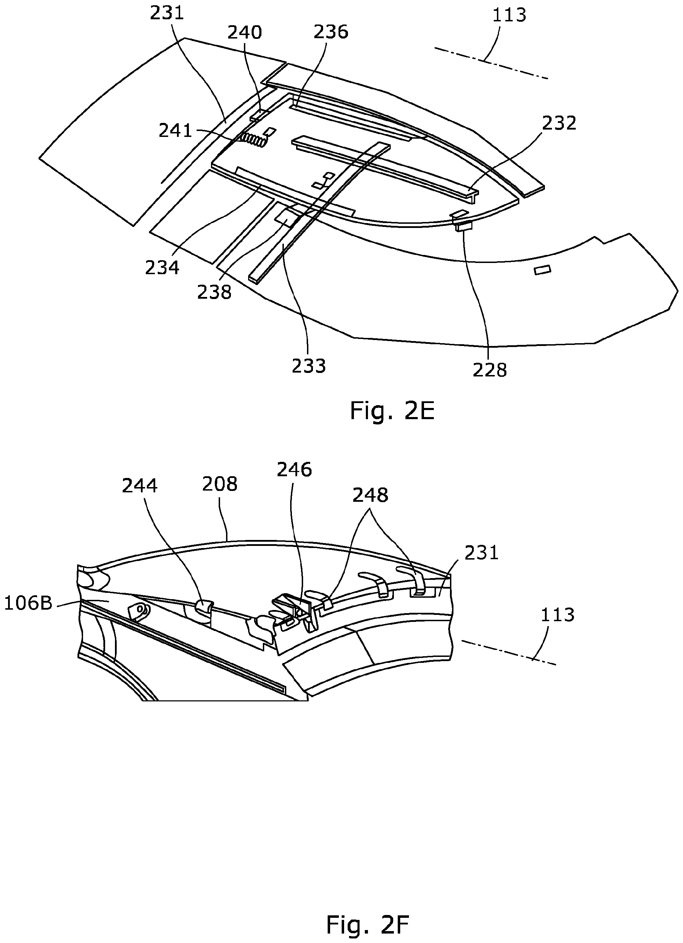

Referring to Figures 1, 2A and 2C, an aircraft (not shown) has a wing structure illustrated in part as the leading edge slat 104 of a wing 102. The leading edge slat 104 is movable forward and downward, for example, during a landing operation so as to create drag to assist with a slowing down of the aircraft subsequent to touchdown.

The aircraft includes a pylon/mount 106 which extends from the wing 102 to support a jet engine 108. The jet engine 108 includes a nacelle 110 for encasing an engine (not shown) and for enhancing aerodynamic performance of the aircraft 100. The engine and the nacelle 110 have a selectively operated reverse thruster which redirects a bypass air flow to cascades 116 during a reverse thrust operation.

A translating cowl panel, or transcowl, 120 of the nacelle 110 is configured to be transversely moveable, upon the action of a drive actuator 126, between a "stowed" (Figure 2A) and a "deployed" (Figures 1 & 2C) state during a landing operation. The translating cowl panel 120 is located behind an inlet side, stationary fan cowl panel 114 used to cover the engine. In its stowed state, the translating cowl panel 120 is close to the fan cowl panel 114, e.g. in contact with the fan cowl panel 114. In its deployed state, the translating cowl panel is 120 is away from the fan cowl panel 114 so as to expose the cascade 116 for emitting reverse thrust airflow; and

According to the invention, an automatic translating panel (ATP) 208 arranged in proximity to the leading edge slat 104 of the aircraft wing 102 to which the nacelle is mounted/is to be mounted. The automatic translating panel is thus arranged on the top of the nacelle 110, near the pylon 106. The automatic translating panel 208 is configured to move transversely in automated coordination with movement of the translating cowl panel 120 during at least a portion of a movement range of the translating cowl panel 120, movement of the automatic translating panel being less than movement of the translating cowl panel 120 so as to preserve a variable clearance space or nacelle clearance area 124, between the automatic translating panel 208 and the leading edge slat 104 when the automatic translating panel 208 transitions between stowed and deployed states. The nacelle clearance area 124 maintains a clearance at the interface of the nacelle 110 and the leading edge slat 104 during, for example, a landing operation.

As will be described, the automatic translating panel 208 includes at least one spring for biasing the automatic translating panel 208 in compression to retain the latter in its stowed state of Figure 2A relative to the translating cowl panel 120, compression of the spring being released upon movement of the translating cowl panel 120 during a reverse thrust operation to cause movement of the automatic translating panel 208.

As show, in Figure 2A, the nacelle 110 includes a hinged access panel having portions 210 and 216, each having plural hinges configured for selective rotational movement of the hinged access panel to provide engine access. The hinge access panel portions are screwed in place or fixed by other known techniques to the pylon 106.

Portions 120a and 120b of the translating cowl panel 120 are configured for placement on opposing inbound 202 and outbound 204 sides of the jet engine, and are non-symmetrically shaped and arranged with regard to the central longitudinal axis 113 of the nacelle. Note that in Figure 2A, a transverse plane which passes through the longitudinal axis 113 divides the jet engine 108 and its nacelle 110 into the inbound and outbound sides 202, 204.

In the Figure 2A example, the top view illustrates a left hand side as the inbound side 202 of the nacelle, and a right hand side 204 , or outbound side of the nacelle. The inbound side 202 of the nacelle 110 is positioned closer to the fuselage (not shown) of the aircraft, while the outbound side 204 of the nacelle is on a side of the nacelle 110 further from the aircraft fuselage.

The automatic translating panel 208 is positioned in the nacelle clearance area 124 of Figure 1 on only the Figures 2A &C inbound side 202 of the jet engine. As such, the cascades 116 (see Figure 2C) have a first cascade portion 116a with a first shape arranged on the inbound side 202 of the jet engine 108, and a second cascade portion 116b with a second shape arranged on an outbound side 204 of the jet engine 108, the shapes of the first and second cascade portions being asymmetric relative to the central longitudinal axis 113 of the jet engine 108, with the first cascade portion 116a arranged on the inbound side 202 being smaller than the second cascade 116b portion on the outbound side 204.

In a stowed state of the translating cowl panel 120, the cascades 116 are completely encased.

The automatic translating panel 208 is fastened to nacelle 110 in a manner which permits its movement. The automatic translating panel 208 can be configured to include hinges attached thereto which slideably engage with stationary track guides for providing translational movement of the automatic translating panel 208 along the stationary guide tracks, and for retaining the automatic translating panel 208 in place on the nacelle 110 when the aircraft is in flight, as well as during movement of the automatic translating panel 208 from a stowed state to a deployed state and vice versa.

In reference to Figures 2D to 2F, an infrastructure (i.e. beneath the nacelle) of the jet engine 108 includes a stationary aircraft jet engine structure comprising a forward frame 231 and an aft frame 233 and various stationary tracks, such as a primary track 232. The forward frame 231 and the aft frame 233 extend along a perpendicular plane to the central longitudinal axis 113 of the nacelle. A secondary track 234, and a tertiary track 236 are fixedly mounted to the stationary aircraft jet engine structure. The first, secondary and tertiary tracks extend all along a direction parallel to the central longitudinal axis 113 of the nacelle,

Several connection elements, such as one or more hinges or sliders, affixed to the various moving panels (i.e., the translating cowl panel 120 and the automatic translating panel 208) are used to guide the moveable panels.

In particular, the automatic translating panel includes connection elements such as one or more hinges 244 or sliders 238 for guiding its movement along the stationary guide tracks, i.e. secondary and tertiary tracks 234,236 located beneath the automatic translating panel 208. The hinges 244 and sliders 238 are included on a periphery of the automatic translating panel 208 and engage with the stationary guide tracks 234,236.

In response to a pushing of the translating cowl panel 120 in the aftward direction, the slider 238 moves along the secondary track 234. Note that movement of the translating cowl panel 120 is on the order of several feet.

The automatic translating panel 208 comprises a pushing device 228 by which the drive actuator 126 engages with the translating cowl panel 120 to push it in an aft direction for deployment during a reverse thrust operation. The pushing device 228 can of course be located in any suitable location. A panel radial contact 230 can be included at some position along the automatic translating panel 208 with contacts such that when the contacts are in proximity to one another, an indication (e.g., blinking light, or light on) can be provided to confirm the automatic translating panel 208 to be in a stowed states. However, when the automatic translating panel 208 automatically deploys in response to motion of the translating cowl panel 120, the relative proximity of the panel radial contact 230 is displaced to provide an indication (e.g., steady light, or light off) to indicate that the automatic translating panel 208 has repositioned out of its stowed state and toward and/or into its deployed state.

In addition to the various hinges 244 and sliders 238, snubbers such as snubber 240 are included at and about a periphery of the automatic translating panel 208 and the translating cowl panel 120 to retain the translating cowl panel 120 and the automatic translating panel 208 in place during flight. Mechanical snubbers are known devices which can protect components from excess sway due to transient force. A snubber 240 allows for movement in tension and compression, and upon occurrence of an impulse event can activate to become rigid and retain the otherwise movable panels in place.

Movement of the translating cowl panel 120 also releases a compression fitting, e.g., one or more coil compression springs 241 located at or near the pushing device 228, which compression springs 241 release in response to movement of the translating cowl panel 120 of the automatic translating panel 208 so as to allow its movement along the stationary guide tracks a limited distance (e.g., on the order of 10 millimeters). This movement is performed by a release of the compression springs 241 used to otherwise maintain the automatic translating panel 208 in place.

As the automatic translating panel 208 needs to remain affixed to the jet engine 108 while it translates, and upon decompression of the springs once the translating cowl panel 120 has moved in the aftward direction, the hinges 244 also serve for retaining the automatic translating panel 208 in place during its movement.

Note that springs, such as springs 248 are configured around a periphery of the automatic translating panel 208 and can release upon movement of the translating cowl panel 120 so as to allow the automatic translating panel to move aftward. This movement can be controlled through the use of hinge devices such as the slider hinges 244 included on a periphery of the automatic translating panel 208, which engage with the stationary guide tracks located beneath the automatic translating panel 208.

One or more snubbers 246 can also be located at positions around the automatic translating panel 208 to assist with its retention in place during normal operation, and to release and allow motion of the automatic translating panel 208 during a reverse thrust operation.

This snubbers 246 are used to assist the retention of the automatic translating panel 208 in place and to assist with stopping movement of the automatic translating panel 208 when it displaces to the extent of its support position.

Springs or snubbers (not shown) can also be positioned on the periphery of the automatic translating panel 208 to act against a stop for limiting motion of the automatic translating panel and/or translating cowl panel 120 once in its deployed state.

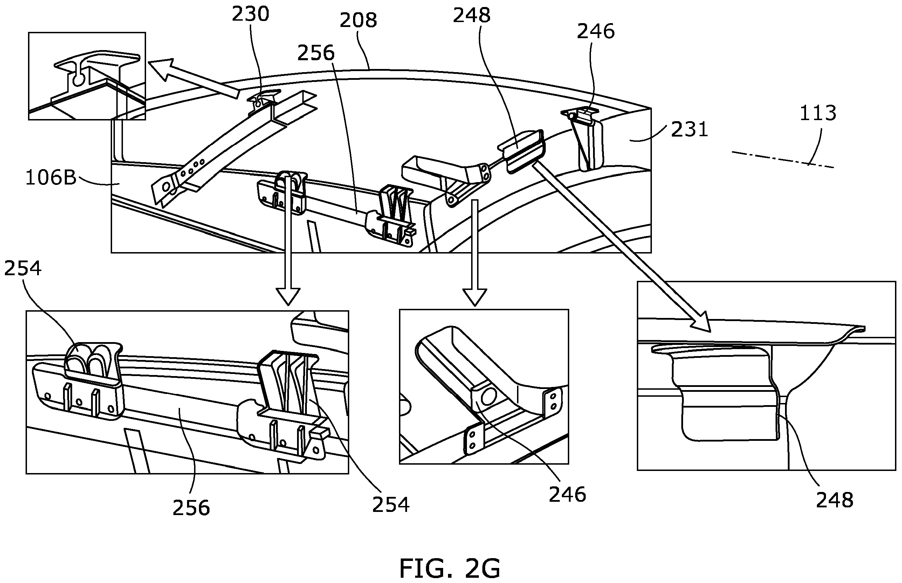

In an alternate embodiment of a slider mechanism for retaining the automatic translating panel 208 in place on the nacelle 110, yet allowing limited translation in an aftward direction, and in reference to Figure 2G, the slider arrangement includes a slider fitting attached to the automatic translating panel 208 for engaging with a stationary guide track attached to the jet engine 108 for guiding movement of the automatic translated panel 208 relative to the translating cowl panel 120. More particularly, as an alternative (or addition) to the hinge arrangement for connecting the automatic translating panel 208 to the jet engine 108, the automatic translating panel 208 comprises sliders 254 which engage with a guide track 256 along which the sliders translate upon release of the at least one compression spring 241 holding the automatic translating panel 208 in place, said guide track 256 extending along a direction parallel to the central longitudinal axis 113 and being fixed to a fixed structure such as the upper beam 106B of the jet engine pylon 106.

The at least one slider fitting attached to the automatic translating panel 208 engages with a stationary guide track attached to the jet engine for guiding movement of the automatic translating panel 208 relative to the hinged access panel which remains stationary during movement of the automatic translating panel, and for guiding the automatic translating panel 208 relative to the translating cowl. Note that portions of the translating cowl panel 120 and the automatic translating panel 208 configured for placement on opposing inbound and outbound sides of the jet engine 108 are non-symmetrically arranged with regard to the central longitudinal axis 113 of the nacelle according to both the Figure 2F and Figure 2G embodiments.

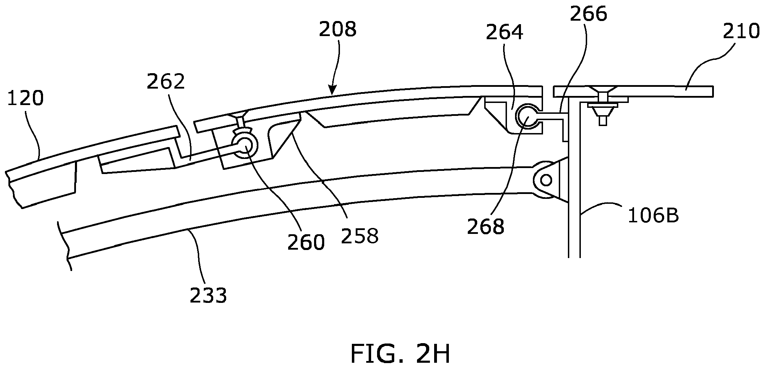

In another alternate embodiment of a slider mechanism for retaining the automatic translating panel 208 in place yet allowing its translational movement, and in reference to figure 2H, an integrated slider fitting 258 is integrally formed on an underside of a first side of the automatic translating panel 208 and comprises a guide track represented as a cylindrical guide channel 260. The translating cowl panel 120 includes an integrated slider fitting 262 integrally formed on an underside of the translating cowl panel 120 for engaging with the stationary guide 260. The fitting can be formed as a male connector which engages with the cylindrical channel 260.

On the other side of the automatic translating panel 208,an integrated slider fitting 264 is integrally formed on an underside the automatic translating panel 208 and comprises a guide track represented as a cylindrical guide channel 268. A slider fitting 266 attached to the upper beam 106B of the jet engine pylon 106 engages with the stationary guide 268 The fitting can be formed as a male connector which engages with the cylindrical channel 268.

The two guide tracks channels 260 and 264 extend along a direction parallel to the central longitudinal axis 113.

As described therein, note that in the Figure 2A and 2C embodiment, the automatic translating panel 208 only exists on the inbound side 202 of the jet engine 108 so as to address clearance issues with regard to the leading edge slat 104 of the aircraft wing 102 on the inbound side of the jet engine. In an alternate embodiment, an in relation with Figure 2B, mirror image portions 208, 222 of the automatic translating panel are configured for placement on the opposing inbound and outbound sides 202, 204 of the jet engine, and are symmetrically arranged with regard to the central longitudinal axis 113 of the nacelle 110. According to this alternate embodiment, portions 120a and 120b of the translating cowl panel 120 are configured for placement on opposing inbound 202 and outbound 204 sides of the jet engine, and are symmetrically shaped and arranged with regard to the central longitudinal axis 113 of the nacelle.

## Claims

1. A nacelle (110) for a jet engine (108) having a selectively operated reverse thruster which redirects air flow to cascades (116) during a reverse thrust operation, the nacelle (110) having a central longitudinal axis (113) and comprising:
a fan cowl panel (114) configured as a stationary partial cover for the jet engine (108);
a translating cowl panel (120) configured to move, during a reverse thrust operation, along an axis parallel to the central longitudinal axis (113) between a stowed state, in which the translating cowl panel (120) is close to the fan cowl panel (114), and a deployed state, in which the translating cowl panel is (120) is away from the fan cowl panel (114) so as to expose the cascade (116) for emitting reverse thrust airflow; and wherein
the nacelle (110) comprises at least one automatic translating panel (208) configured to be arranged in proximity to a leading edge slat (104) of an aircraft wing to which the nacelle (110) is to be mounted, the automatic translating panel being movable, between a stowed and deployed states, along an axis parallel to the central longitudinal axis (113) in automated coordination with movement of the translating cowl panel (120) during at least a portion of a movement range of the translating cowl panel (120); **characterized in that** movement of the automatic translating panel (208) along an axis parallel to the central longitudinal axis (113) is less than movement of the translating cowl panel (208) so as to provide a variable clearance space (124) between the automatic translating panel (208) and the leading edge slat (104) when the automatic translating panel (120) transitions between its stowed and deployed states.

2. The nacelle (110) as claimed in claim 1, **characterized in that** the automatic translating panel (208) comprises at least one compression spring (241) for biasing the automatic translating panel (208) in compression to retain the automatic translating panel (208) in a stowed state relative to the translating cowl panel (120), compression of the spring being released upon movement of the translating cowl panel (120) during a reverse thrust operation to cause movement of the automatic translating panel (208).

3. The nacelle (110) as claimed in claims 1 to 2, **characterized in that** the automatic translating panel (208) comprises a radial contact (230) for indicating when the automatic translating panel (208) is in a stowed state, and/or when the automatic translating panel (208) is in a deployed state.

4. The nacelle (110) as claimed in claims 1 to 3, the nacelle comprising stationary guide tracks (234,236) extending along a direction parallel to the central longitudinal axis (113), **characterized in that** the automatic translating panel (208) includes connection elements (238,244) for guiding its movement along the stationary guide tracks located beneath the automatic translating panel (208), the connection elements (238,244) are arranged on a periphery of the automatic translating panel (208) and engage with the stationary guide tracks (234,236).

5. The nacelle (110) as claimed in claims 1 to 4, **characterized in that** the automatic translating panel (208) includes springs (248) that are arranged around a periphery of the automatic translating panel (208) and that release upon movement of the translating cowl panel (120) so as to allow the automatic translating panel (108) to move.

6. The nacelle (110) as claimed in claims 1 to 5, **characterized in that** the nacelle (110) comprises two automatic translating panels (208) respectively placed on two opposing sides of the jet engine (108) relative to the central longitudinal axis (113), said panels (208) are symmetrically arranged with regard to the central longitudinal axis (113).

7. The nacelle (110) according to claim 6, **characterized in that** the cascades (116) have a first cascade portion (116a) with a first shape arranged on first side (202) of the jet engine (108), and a second cascade portion (116b) with a second shape arranged on second side (204) of the jet engine (108), the shapes of the first and second cascade portions (116a,116b) being asymmetric relative to the central longitudinal axis (113).

8. The nacelle (110) as claimed in claims 1 to 5, **characterized in that** the nacelle (110) comprises only one automatic translating panel (208).

## Patentansprüche

1. Gondel (110) für ein Strahltriebwerk (108), das einen selektiv betätigten Schubumkehrer aufweist, der den Luftstrom während eines Schubumkehrvorgangs zu Kaskaden (116) umleitet, wobei die Gondel (110) eine mittige Längsachse (113) aufweist und Folgendes umfasst:
ein Lüfterhaubenpaneel (114), das als stationäre Teilabdeckung für das Strahltriebwerk (108) ausgelegt ist; ein Verschiebungshaubenpaneel (120), das dazu ausgelegt ist, sich während eines Schubumkehrvorgangs entlang einer Achse parallel zur mittigen Längsachse (113) zwischen einem Einfahrzustand, in dem sich das Verschiebungshaubenpaneel (120) in der Nähe des Lüfterhaubenpaneels (114) befindet, und einem Ausfahrzustand, in dem das Verschiebungshaubenpaneel (120) vom Lüfterhaubenpaneel (114) entfernt ist, um die Kaskade (116) zum Ausstoßen des Schubumkehrluftstroms freizulegen, beweglich zu sein; und wobei
die Gondel (110) mindestens ein automatisches Verschiebungspaneel (208) umfasst, das dazu ausgelegt ist, in der Nähe eines Vorderkantenvorflügels (104) einer Flugzeugtragfläche, an der die Gondel (110) zu montieren ist, angeordnet zu sein, wobei das automatische Verschiebungspaneel in einer automatisierten Koordination mit der Bewegung des Verschiebungshaubenpaneels (120) während zumindest eines Teils eines Bewegungsbereichs des Verschiebungshaubenpaneels (120) zwischen einem Einfahr- und Ausfahrzustand entlang einer Achse parallel zur mittigen Längsachse (113) beweglich ist, **dadurch gekennzeichnet, dass**
die Bewegung des automatischen Verschiebungspaneels (208) entlang einer Achse parallel zur mittigen Längsachse (113) kleiner als die Bewegung des Verschiebungshaubenpaneels (208) ist, um einen variablen Zwischenraum (124) zwischen dem automatischen Verschiebungspaneel (208) und dem Vorderkantenvorflügel (104) vorzusehen, wenn das automatische Verschiebungspaneel (120) zwischen dem Einfahr- und Ausfahrzustand wechselt.

2. Gondel (110) nach Anspruch 1, **dadurch gekennzeichnet, dass** das automatische Verschiebungspaneel (208) mindestens eine Druckfeder (241) zum Vorspannen des automatischen Verschiebungspaneels (208) in einer Kompression, um das automatische Verschiebungspaneel (208) in Bezug zum Verschiebungshaubenpaneel (120) in einem Einfahrzustand zu halten, umfasst, wobei die Kompression der Feder bei der Bewegung des Verschiebungshaubenpaneels (120) während eines Schubumkehrvorgangs gelöst wird, um die Bewegung des automatischen Verschiebungspaneels (208) zu bewirken.

3. Gondel (110) nach einem der Ansprüche 1 bis 2, **dadurch gekennzeichnet, dass** das automatische Verschiebungspaneel (208) einen radialen Kontakt (230) umfasst, um anzuzeigen, wenn sich das automatische Verschiebungspaneel (208) im Einfahrzustand befindet und/oder wenn sich das automatische Verschiebungspaneel (208) im Ausfahrzustand befindet.

4. Gondel (110) nach einem der Ansprüche 1 bis 3, wobei die Gondel stationäre Führungsschienen (234, 236) umfasst, die sich in eine Richtung parallel zur mittigen Längsachse (113) erstrecken, **dadurch gekennzeichnet, dass** das automatische Verschiebungspaneel (208) Verbindungselemente (238, 244) umfasst, um dessen Bewegung entlang der stationären Führungsschienen, die sich unter dem automatischen Verschiebungspaneel (208) befinden, zu führen, wobei die Verbindungselemente (238, 244) am Umfang des automatischen Verschiebungspaneels (208) angeordnet sind und in die stationären Führungsschienen (234, 236) eingreifen.

5. Gondel (110) nach einem der Ansprüche 1 bis 4, **dadurch gekennzeichnet, dass** das automatische Verschiebungspaneel (208) Federn (248) umfasst, die um den Umfang des automatischen Verschiebungspaneels (208) angeordnet sind und sich bei der Bewegung des Verschiebungshaubenpaneels (120) lösen, um zuzulassen, dass sich das automatische Verschiebungspaneel (108) bewegt.

6. Gondel (110) nach einem der Ansprüche 1 bis 5, **dadurch gekennzeichnet, dass** die Gondel (110) zwei automatische Verschiebungspaneele (208) umfasst, die jeweils auf zwei entgegengesetzten Seiten des Strahltriebwerks (108) in Bezug zur mittigen Längsachse (113) angeordnet sind, wobei die Paneele (208) in Bezug zur mittigen Längsachse (113) symmetrisch angeordnet sind.

7. Gondel (110) nach Anspruch 6, **dadurch gekennzeichnet, dass** die Kaskaden (116) einen ersten Kaskadenabschnitt (116a) mit einer ersten Form, der auf der ersten Seite (202) des Strahltriebwerks (108) angeordnet ist, und einen zweiten Kaskadenabschnitt (116b) mit einer zweiten Form, der auf der zweiten Seite (204) des Strahltriebwerks (108) angeordnet ist, aufweisen, wobei die Formen des ersten und zweiten Kaskadenabschnitts (116a, 116b) in Bezug zur mittigen Längsachse (113) asymmetrisch sind.

8. Gondel (110) nach einem der Ansprüche 1 bis 5, **dadurch gekennzeichnet, dass** die Gondel (110) nur ein automatisches Verschiebungspaneel (208) umfasst.

## Revendications

1. Nacelle (110) pour un moteur à réaction (108) comportant un inverseur de poussée à manœuvre sélective qui redirige un flux d'air vers des grilles (116) au cours d'une manœuvre d'inversion de poussée, la nacelle (110) comportant un axe longitudinal central (113) et comprenant :
un panneau de capot de soufflante (114) configuré comme un carénage partiel fixe pour le moteur à réaction (108) ;
un panneau de capot à translation (120) configuré pour effectuer un mouvement, au cours d'une manœuvre d'inversion de poussée, suivant un axe parallèle à l'axe longitudinal central (113), entre un état rentré, dans lequel le panneau de capot à translation (120) est proche du panneau de capot de soufflante (114), et un état déployé, dans lequel le panneau de capot à translation (120) est à l'écart du panneau de capot de soufflante (114) de manière à rendre apparente la grille (116) pour l'émission d'un flux d'air d'inversion de poussée ; et
la nacelle (110) comprenant au moins un panneau à translation automatique (208) configuré pour être agencé à proximité d'un bec de bord d'attaque (104) d'une aile d'aéronef sur laquelle la nacelle (110) est destinée à être montée, le panneau à translation automatique étant mobile, entre un état rentré et un état déployé, suivant un axe parallèle à l'axe longitudinal central (113) en coordination automatisée avec un mouvement du panneau de capot à translation (120) au cours d'au moins une partie d'une plage de mouvement du panneau de capot à translation (120) ;
**caractérisée en ce qu'**un mouvement du panneau à translation automatique (208) suivant un axe parallèle à l'axe longitudinal central (113) est moindre qu'un mouvement du panneau de capot à translation (208) de manière à procurer un espace de dégagement variable (124) entre le panneau à translation automatique (208) et le bec de bord d'attaque (104) lorsque le panneau à translation automatique (120) passe entre ses états rentré et déployé.

2. Nacelle (110) selon la revendication 1, **caractérisée en ce que** le panneau à translation automatique (208) comprend au moins un ressort de compression (241) destiné à solliciter le panneau à translation automatique (208) en compression pour retenir le panneau à translation automatique (208) dans un état rentré par rapport au panneau de capot à translation (120), la compression du ressort se relâchant lors d'un mouvement du panneau de capot à translation (120) au cours d'une manœuvre d'inversion de poussée pour provoquer un mouvement du panneau à translation automatique (208).

3. Nacelle (110) selon les revendications 1 à 2, **caractérisée en ce que** le panneau à translation automatique (208) comprend un contact radial (230) destiné à indiquer lorsque le panneau à translation automatique (208) occupe un état rentré et/ou lorsque le panneau à translation automatique (208) occupe un état déployé.

4. Nacelle (110) selon les revendications 1 à 3, la nacelle comprenant des chemins de guidage fixes (234, 236) s'étendant suivant une direction parallèle à l'axe longitudinal central (113), **caractérisée en ce que** le panneau à translation automatique (208) comporte des éléments de liaison (238, 244) destinés à en guider le mouvement suivant les chemins de guidage fixes situés sous le panneau à translation automatique (208), les éléments de liaison (238, 244) sont agencés sur une périphérie du panneau à translation automatique (208) et coopèrent avec les chemins de guidage fixes (234, 236).

5. Nacelle (110) selon les revendications 1 à 4, **caractérisée en ce que** le panneau à translation automatique (208) comporte des ressorts (248) qui sont agencés autour d'une périphérie du panneau à translation automatique (208) et qui se relâchent lors d'un mouvement du panneau de capot à translation (120) de manière à permettre un mouvement du panneau à translation automatique (108).

6. Nacelle (110) selon les revendications 1 à 5, la nacelle (110) étant **caractérisée en ce qu'**elle comprend deux panneaux à translation automatiques (208) placés respectivement de deux côtés opposés du moteur à réaction (108) par rapport à l'axe longitudinal central (113), lesdits panneaux (208) étant agencés symétriquement par rapport à l'axe longitudinal central (113).

7. Nacelle (110) selon la revendication 6, **caractérisée en ce que** les grilles (116) comportent une première partie de grille (116a) présentant une première forme agencée d'un premier côté (202) du moteur à réaction (108), et une deuxième partie de grille (116b) présentant une deuxième forme agencée d'un deuxième côté (204) du moteur à réaction (108), les formes des première et deuxième parties de grille (116a, 116b) étant asymétriques par rapport à l'axe longitudinal central (113) .

8. Nacelle (110) selon les revendications 1 à 5, la nacelle (110) étant **caractérisée en ce qu'**elle comprend un seul panneau à translation automatique (208).
